# EUROPEAN PATENT APPLICATION

(11) **EP 2 963 940 A1**
(43) Date of publication of application: **06.01.2016**
(21) Application number: 15163235.3
(22) Date of filing: 03.05.2006
(51) Int. Cl.: H04Q 3/74

(54) **METHOD FOR PROVIDING CALLER IDENTIFICATION SERVICE AND SYSTEM OF ENABLING THE METHOD**

(30) Priority: 03.05.2005 KR 20050036922; 26.05.2005 KR 20050044591
(62) Divisional of application: 06757622.3
(71) Applicant: INTEL Corporation, Santa Clara, CA 95052 (US)
(72) Inventor: Kim, Sok Bom, 143-832 Seoul (KR); Hong, Sung Ryong, Seoul 120-709 (KR); Yun, Jeong Lim, 156-778 Seoul (KR); Kim, Young Hyun, 15-901 Seoul (KR)
(74) Representative: Ferreccio, Rinaldo

(57) **Abstract**

A caller identification service providing system including: a biz lettering database recording identification information with respect to at least one originating terminal belonging to a subscriber and predetermined multimedia data registered by the subscriber; and a biz lettering server receiving a call request signal from the at least one originating terminal, reading the multimedia data corresponding to the identification information of the at least one originating terminal from the biz lettering database, and transmitting the call request signal including the read multimedia data to a terminating terminal.

## Description

### Technical Field

The present invention relates to caller identification (ID) service providing method and system, and more particularly, to a method and system for providing caller ID service to a business subscriber, in which multimedia data with respect to the business subscriber is received from the business subscriber and stored, and when a call request signal is received by a predetermined terminating terminal from an originating terminal belonging to the business subscriber, the multimedia data is inserted into the call request signal and transmitted to the terminating terminal.

### Background Art

A lettering service, known as calling name presentation (CNAP), indicates a service in which a telephone number and a nickname are previously registered in a predetermined server via a website, and when a phone call is made from a wired or wireless terminal to a communication terminal, the registered phone number and the nickname are displayed in the terminating communication terminal. When using the lettering service, since a nickname or name of a caller is automatically displayed when receiving a phone call, a user may easily recognize who the caller is and may selectively receive a phone call.

Due to the convenience, the lettering service is broadly used by many communication terminal users, in addition to caller number display service (CNIP).

However, a conventional lettering service is substantially used within only a very private scope such as person to person. Accordingly, unlimited profits according to advertisements of an enterprise using the lettering, which should be possible with lettering service, may not be expected in the conventional lettering service.

As described above, since a callback service of business lettering is difficult to be provided, the conventional lettering service may not be used as advertisement means of enterprises. In most of enterprises, a private branch exchange (PBX) is installed to support internal communication using an extension and external communication using an outside line. In this case, a calling number of a communication terminal included in the PBX may be different from a receiving number of the communication terminal.

Namely, when the communication terminal makes a phone call to the outside by using the PBX, a number of the communication terminal given by the PBX is displayed in a receiving terminal. Since the displayed number is used for only calling and is not a real number of the PBX at a point of function, even though a user of the receiving terminal calls back to the displayed number, a call connection to the communication terminal included in the PBX cannot be pelformed. Por example, an announcement indicating that the displayed number is an unused number is heard or a phone call to a different communication terminal is made.

For example, when a receiving terminal receives a call from Mr. Hong of an enterprise named Widerthan, "02-555-0001" that is a number of a communication terminal disposed on a desk of Mr. Hong is displayed in the receiving terminal. When a user of the receiving terminal pushes a send button to make a phone call to Mr. Hong, a call request is sent to "02-555-0001 ". However, since the number is just the number of the communication terminal of Mr. Hong of the enterprise and is not a number capable of receiving a phone call, the user of the receiving terminal fails to make a phone call to Mr. Hong. Therefore, the user of the receiving terminal has a great inconvenience because the user of the receiving terminal has to search for a representative phone number of the enterprise with a phone book to make a phone call to Mr. Hong.

As described above, though an enterprise using the PBX uses a lettering service, since the lettering service cannot support a callback from a customer to the enterprise, the lettering service is not substantially used.

To solve the described problems, in the case of a call request signal, including lettering, of an external call through a PBX, a lettering service with respect to a business subscriber, enabling a callback to a communication terminal sending the call request signal by an operation of pushing a send button, is required.

### Disclosure of Invention

### Technical Problem

An aspect of the present invention provides a method and system for providing caller ID service with respect to a business subscriber, and supporting a lettering service with respect to the business subscriber.

An aspect of the present invention also provides a method and system for providing caller ID service with respect to a business subscriber, in which a callback number of an originating terminal included in the business subscriber is received from the business subscriber, the callback number is stored, and the callback number is inserted into a call request signal received from the originating terminal via a PBX of the business subscriber and is sent to a terminating terminal, thereby supporting a callback from the outside in a communication terminal of the business subscriber including the PBX.

An aspect of the present invention also provides a method and system for providing caller ID service with respect to a business subscriber, in which a call request signal including multimedia data with respect to the business subscriber is sent from an originating terminal to a terminating terminal, and when a callback request signal with respect to the originating terminal is received from the terminating terminal, call access with respect to the callback request signal is controlled by setting up the callback number as a receiving number, thereby supporting a callback from the outside in the originating terminal of the business subscriber using a PBX.

An aspect of the present invention also provides a method and system for providing caller ID service with respect to a business subscriber, in which multimedia data including the callback number is inserted into a call request signal received from an originating terminal included in a business subscriber and sent to a terminating terminal and the terminating terminal displays the multimedia data including the callback number, thereby easily sending a call request to the originating terminal by the callback number displayed in a display unit of the terminating terminal.

### Technical Solution

According to an aspect of the present invention, there is provided a caller identification service providing system including: a biz lettering database recording identification information with respect to at least one originating terminal belonging to a subscriber and predetermined multimedia data registered by the subscriber; and a biz lettering server receiving a call request signal from the at least one originating terminal, reading the multimedia data corresponding to the identification information of the originating terminal from the biz lettering database, and transmitting the call request signal including the read multimedia data to a terminating terminal.

Other objects of the present invention are specified in the following points:
1. A caller identification service providing system comprising a biz lettering database recording identification information with respect to at least one originating terminal belonging to a subscriber and predetermined multimedia data registered by the subscriber; and a biz lettering server receiving a call request signal from the at least one originating terminal, reading the multimedia data corresponding to the identification information of the originating terminal from the biz lettering database, and transmitting the call request signal including the read multimedia data to a terminating terminal.
2. The system according to point 1, wherein the originating terminal transmits the call request signal via a private branch exchange (PBX).
3. The system according to point 1 or 2, wherein the biz lettering database further records a callback number with respect to the originating terminal; the biz lettering server extracts the callback number corresponding to the originating terminal from the biz lettering database and transmits the call request signal including the read callback number to the terminating terminal; and the terminating terminal receives the call request signal, displays the multimedia data on a predetermined display unit, and transmits a call request to the callback number included in the call request signal when a request of calling the originating terminal back is inputted from a user of the terminating terminal.
4. The system according to point 3, wherein the biz lettering server inserts the callback number in a caller identification area of the call request signal.
5. The system according to point 3, wherein the biz lettering server comprises a communication unit receiving the call request signal from the originating terminal belonging to the subscriber; a callback lettering read unit reading the callback number and multimedia data corresponding to the identification information of the originating terminal from the biz lettering database; a callback lettering insertion unit inserting the callback number and multimedia data in the caller identification area of the call request signal; and a transmission control unit transmitting the call request signal including the callback number and multimedia data to the terminating terminal via the communication unit.
6. The system according to point 5, wherein the callback number insertion unit inserts the callback number in the multimedia data; and the terminating terminal displays the multimedia data and the callback signal on the predetermined display unit.
7. The system according to point 1 or 2, wherein the biz lettering database further records a callback number with respect to the originating terminal; and the biz lettering server extracts the callback number corresponding to the identification information of the originating terminal from the biz lettering database and controls call connection to the callback number to be performed, when receiving the callback request signal transmitted as the identification information of the originating terminal from the terminating terminal.
8. The system according to point 7, wherein the biz lettering server comprises a communication unit receiving the call request signal from the originating terminal belonging to the subscriber; a data read unit reading the multimedia data corresponding to the identification information of the originating terminal from the biz lettering database; a data insertion unit inserting the multimedia into a caller identification area of the call request signal; and a transmission control unit transmitting the call request signal to the terminating terminal via the communication unit, wherein, when receiving the callback request signal from the terminating terminal via the communication unit, the data read unit reading the callback number corresponding to the identification information of the originating terminal from the biz lettering database and controlling a call connection to the callback number to be performed.
9. The system according to point 8, wherein the data read unit extracts the callback number corresponding to the identification information of the originating terminal from the biz lettering database; the data insertion unit inserts the callback number in the multimedia data; and the terminating terminal displays the multimedia data and the callback number on the predetermined display unit.
10. A caller identification service providing method comprising receiving identification information and multimedia data with respect to at least one originating terminal from a subscriber via a predetermined communication network; recording the identification information and the multimedia data in a biz lettering database; receiving a call request signal with respect to a terminating terminal from the at least one originating terminal; reading the multimedia data corresponding to the identification information of the originating terminal from the biz lettering database; inserting the multimedia data in the call request signal; and transmitting the call request signal to the terminating terminal.
11. The method according to point 10, further comprising receiving and recording a callback number with respect to the originating terminal from the subscriber in the biz lettering database; reading the callback number corresponding to the identification information of the originating terminal from the biz lettering database; and inserting the callback number in the call request signal, wherein the terminating terminal receives the call request signal, displays the multimedia data on a predetermined display unit, and controls a call connection to the callback number to be performed when receiving a request of calling the originating terminal back which is inputted from a user of the terminating terminal.
12. The method according to point 11, further comprising inserting the callback number in the multimedia data.
13. The method according to point 10, further comprising receiving and recording a callback number with respect to the originating terminal from the subscriber in the biz lettering database; receiving a callback request signal with respect to the call request signal from the terminating terminal; reading the callback number corresponding to the identification information of the originating terminal from the biz lettering database; and controlling a call connection to the callback number to be performed.
14. The method according to point 13, further comprising reading the callback number with respect to the originating terminal from the biz lettering database; and inserting the callback number in the multimedia data.
15. A computer-readable recording medium in which a program for executing the method according to any one of points 10 through 14 is recorded.

### Brief Description of the Drawings

FIG. 1 is a block diagram illustrating a configuration of an entire network of a system for providing caller ID service with respect to a business subscriber according to the present invention;
FIG. 2 is a block diagram illustrating a configuration of a system for providing caller ID service with respect to a business subscriber, according to a first embodiment of the present invention;
FIG. 3 is a block diagram illustrating an example of a telephone number, a callback number, and multimedia data, recorded in a biz lettering database, according to the first embodiment of the present invention;
FIG. 4 is a block diagram illustrating a configuration of a system for providing caller ID service with respect to a business subscriber, according to a second embodiment of the present invention;
FIG. 5 is a diagram illustrating a callback number displayed in addition to multimedia on a display unit of a second communication terminal, according to another embodiment of the present invention;
FIG. 6 is a flowchart illustrating a method of providing caller ID service with respect to a business subscriber, according to the first embodiment of the present invention; and
FIG. 7 is a flowchart illustrating a method of providing caller ID service with respect to a business subscriber, according to the second embodiment of the present invention.

### Best Mode for Carrying Out the Invention

Biz lettering described in the present specification indicates a business subscriber subscribes to a lettering service and uses a name of an enterprise or a nickname of the business subscriber as lettering.

Also, multimedia data described in the present specification designates lettering according to the biz lettering, and includes all kinds of multimedia files such as an image file, a music file, and a moving image file, in addition to a text file displaying the name of the enterprise or the nickname of the business subscriber.

Hereinafter, the exemplary embodiments of the present invention will be described in detail with reference to the attached drawings.

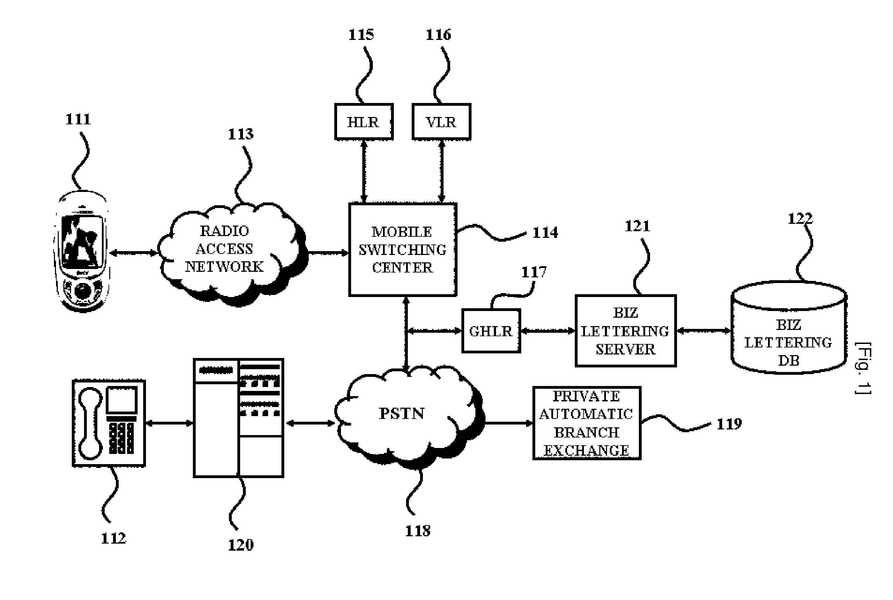

FIG. 1 is a block diagram illustrating a configuration of an entire network of a system for providing caller ID service with respect to a business subscriber according to the present invention.

The system for providing caller ID service with respect to a business subscriber according to the present invention includes a mobile communication terminal 111, a radio access network 113, a mobile switching center 114, a home location register (HLR) 115, a visitor location register (VLR) 116, a gateway home location register (GHLR) 117, a public switched telephone network (PSTN) 118, a private branch exchange 119, a wired terminal 112, a private branch exchange (PBX) 120, a biz lettering server 121, and a biz lettering database 122.

In the present specification, for convenience of description, the wired terminal 112 is an originating terminal sending a call and the mobile communication terminal 111 is a terminating terminal receiving the call. This is just an example for various exemplary embodiments of the present invention. Depending upon circumstances, the mobile communication terminal 111 may become an originating terminal and the wired terminal 112 may become a terminating terminal. Also, in the present specification, identification information is a terminology indicating information for identifying an originating terminal. The identification information designates information uniquely given to a corresponding communication terminal such as a telephone number, an electronic serial number (ESN), and a mobile identification number (MIN) of the communication terminal. Hereinafter, the telephone number of the corresponding communication terminal will be described as an example of the identification information.

The mobile communication terminal 111 may perform a call connection to the wired terminal 112 via the PSTN 118 as well as communication with another mobile communication terminal via the radio access network 113. When the mobile communication terminal 111 subscribes to a caller ID service and lettering service, displaying a calling number and lettering of the other mobile communication terminal or the wired terminal 112 to a user is supported.

The radio access network 113 supports mobile communication of the mobile communication terminal 111 and performs handoff and wireless support administration function. The radio access network 113 includes a base station transmission system (BTS) and a base station controller (BSC).

The mobile switching center 114 processes a basic service and an additional service of a mobile communication terminal accessing the radio access network 113, processes a terminated call and an originating call, processes a position registration procedure and handoff procedure, and performs coupling with another communication network, as the private branch exchange 119 of a mobile communication system.

The HLR 115 receives a temporary local district number (TLDN) of the mobile communication terminal 111 and performs registration recognition, registration deletion, and position identification. Also, the HLR 115 includes profile information of a standby, terminated, and originating terminal. In this case, the profile information includes the MIN, the ESN or mobile communication service information of the mobile communication terminal 111.

The GHLR 117 provides the TLDN of a mobile communication terminal, and is between a mobile communication network and a wired communication network. Particularly, when a phone call is made from the wired terminal 112 to the mobile communication terminal 111, the GHLR 117 requests the biz lettering server 121 to verify whether a telephone number of the wired terminal 112 is registered for the biz lettering service.

The GHLR 117 receiving a callback number of the wired terminal 112 and multimedia data from the biz lettering server 121 in response to the verification requests of the HLR 115 to verify the TLDN of the mobile communication terminal 111. The GHLR 117 receives the TLDN of the mobile communication terminal 111 from the HLR 115 and sends the TLDN to the private automatic branch exchange 119.

The PSTN 118 provides a path for telephone call between wired terminals and telephone call between the wired terminal 112 and the mobile communication terminal 111.

The private automatic branch exchange 119 performs a switch function for 6 telephone calls between a plurality of wired telephones connected to the PSTN 118, or telephone calls between an extension telephone and an external wired telephone.

The PBX 120 is a kind of a switchboard, installed in an enterprise including the wired terminal 112, and performs an external call connection of the wired terminal 112. When the wired terminal 112 requests the external call connection, the PBX 120 may perform a call connection to the mobile communication terminal 111 by using a number only for outgoing calls given to the wired terminal 112 as a calling number. In this case, though the call connected mobile communication terminal 111 requests a call connection to the calling number, the call connection to the wired terminal 112 may not be performed.

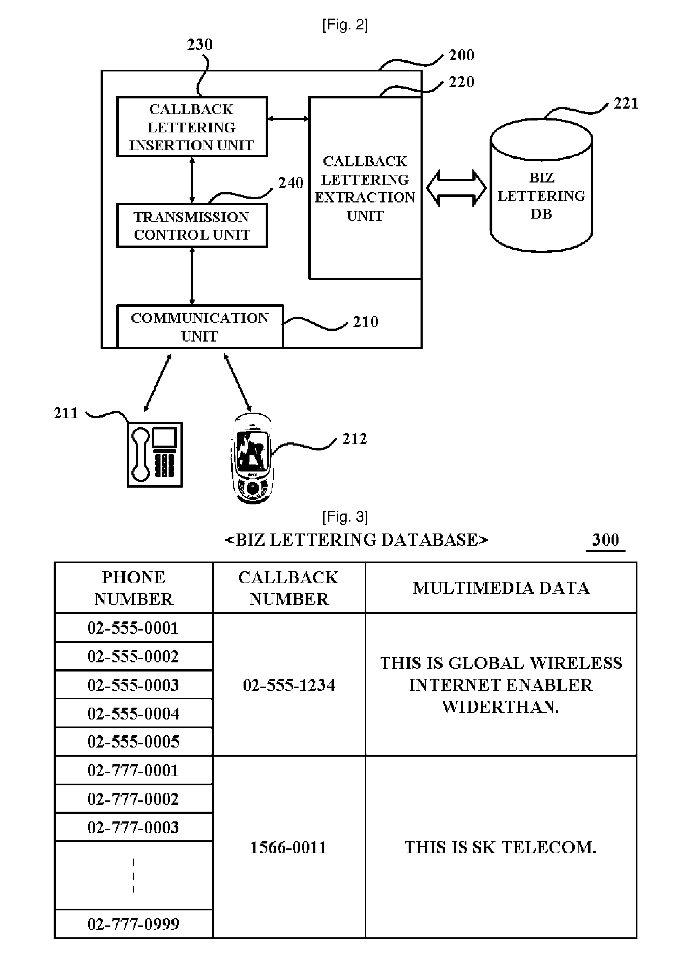

Configurations and operations of the biz lettering server 121 and the biz lettering database 122 will be described in detail with reference to FIGS. 2 through 5.

FIG. 2 is a block diagram illustrating a configuration of a system for providing caller ID service with respect to a business subscriber, according to a first embodiment of the present invention.

In the first embodiment of the present invention, the biz lettering server 200 receiving a first call request signal from the first communication terminal 211 inserts a callback number and multimedia data into the first call request signal and sends the first call request signal to a second communication terminal 212. Also, when a callback request with respect to the first call request signal is received from a user, the second communication terminal 212 sends a call request in which the callback number is set up as a receiving number, to the biz lettering server 200.

In the first embodiment, the first communication terminal 211 is a wired terminal included in a PBX of an enterprise and the second communication terminal 212 is a general mobile communication terminal.

The system for providing caller ID service with respect to a business subscriber, according to a first embodiment of the present invention, includes the biz lettering server 200, a biz lettering database 221, the first communication terminal 211, and the second communication terminal 212. Also, the biz lettering server 200 includes a communication unit 210, a callback lettering extraction unit 220, a callback lettering insertion unit 230, and a transmission control unit 240.

The biz lettering database 221 records and maintains a telephone number and a callback number with respect to at least one first communication terminal included in a business subscriber subscribing to the biz lettering service and predetermined multimedia data registered by the business subscriber.

The telephone number may be an extension number that is a number only for outgoing calls given to the at least one first communication terminal by the PBX including the first communication terminal 211.

The callback number is an external line number of the PBX, by which the first communication terminal 211 may perform a call connection with respect to a call request signal received from an external communication terminal. The telephone number, the callback number, and the multimedia data, recorded in the biz lettering database 221, will be described in detail with reference to FIG. 3.

FIG. 3 is a block diagram illustrating an example of a phone number, a callback number, and multimedia data, recorded in a biz lettering database, according to the first embodiment of the present invention.

Referring to FIG. 3, a telephone number with respect to at least one first communication terminal included in a business subscriber, and a callback number and multimedia data corresponding to the telephone number are recorded in a biz lettering database 300. The telephone number is a number only for outgoing calls given to a communication terminal included in a PBX and may be an extension number given to the communication terminal by the PBX.

The callback number is a number by which the first communication terminal may receive a call request signal from the outside and may be an outside line number. The callback number may correspond to a plurality of telephone numbers. For example, as shown in FIG. 3, telephone numbers "02-555-0001" through "02-555-0005" may correspond to a callback number "02-555-1234". In this case, the outside line number given by the PBX is "02-555-1234" and telephone numbers, namely, extension numbers of five communication terminals included in the PBX, may be "02-555-0001" through "02-5 5 5-0005".

Multimedia data is recorded corresponding to each individual callback number. For example, multimedia data such as "This is global wireless Internet enabler Widerthan" may be recorded corresponding to the callback number "02-555-1234". Also, corresponding to a callback number "1566-0011", multimedia data such as "This is SK telecom" may be recorded.

The multimedia data is a kind of data used in lettering service and may be recorded as a text file as shown in FIG. 3, or may include an image, music, and a moving image.

Referring to FIG. 2, the communication unit 210 performs communication between the first communication terminal 211 and the second communication terminal 212. The communication unit 210 may receive the first call request signal from the first communication terminal 211 and may send the first call request signal to the second communication terminal 212. Also, the communication unit 210 may receive a callback request signal with respect to the first request signal from the second communication terminal 212 and may send the callback request signal to the first communication terminal 211.

The callback lettering extraction unit 220 extracts a callback number and multimedia data corresponding to a telephone number of the first communication terminal 211 sending the first call request signal, from the biz lettering database 221.

The callback lettering extraction unit 220 may extract the callback number and the multimedia data from the biz lettering database 221 after verifying whether the first communication terminal 211 is registered in the biz lettering service according to the present invention from a predetermined mobile communication system, by using the telephone number of the first communication terminal 211.

The callback lettering insertion unit 230 inserts the extracted callback number and the multimedia data into the first call request signal. The callback lettering insertion unit 230 may place the callback number into a caller ID area of the first call request signal.

In the caller ID area, the telephone number of the communication terminal (the first communication terminal 211) sending the first call request signal is recorded in a calling number field. The callback lettering insertion unit 230 may record the callback number in an optional field distinguished from the calling number field in which the telephone number is recorded, in the caller ID area.

The transmission control unit 240 sends the first call request signal including the callback number and the multimedia data to the second communication terminal 212 via the communication unit 210.

The first call request signal includes a telephone number of the second communication terminal 212 to which the first call request signal is to be sent, in a receiving number field in addition to the telephone number of the first communication terminal 211. The transmission control unit sends the first call request signal to the second communication terminal 212 by referring to the telephone number recorded in the receiving number field.

The second communication terminal 212 receives the first call request signal including the callback number and the multimedia data from the biz lettering server 200 and displays the multimedia data to a user. Also, the second communication terminal 212 may extract and display the telephone number of the first communication terminal 211 from the calling number field of the caller ID area of the first call request signal to the user. The telephone number is a number only for outgoing calls given to the first communication terminal 211 by the PBX, and may be an extension number of the first communication terminal 211.

After displaying the multimedia data, when a user of the second communication terminal 212 pushes a send button to request a callback to the first communication terminal 211, the second communication terminal 212 extracts the callback number from the optional field of the caller ID area of the first call request signal.

The second communication terminal 212 sets up the extracted callback number as a receiving number and sends a callback request signal in which the callback number is set up as a receiving number, to the biz lettering server 200. The second communication terminal 212 may include a predetermined module in which a program for executing operations of extracting the callback number as described above and setting up the extracted callback number as the receiving number is recorded.

The biz lettering server 200 receiving the callback request signal from the second communication terminal 212 may send the callback request signal to a predetermined switchboard and may control a call connection between the second communication terminal 212 and the first communication terminal 211 according to the callback request signal.

Through the described sequential operations, even when receiving the call request signal from the first communication terminal 211 via the PBX in which the extension number is set up as a calling number, the user of the second communication terminal 212 may make a phone call with a user of the first communication terminal 211 that sent the call request signal by pushing a send button, as a general callback operation.

Also, in the first embodiment, the biz lettering server 200 may insert the callback number into the multimedia data, may insert the multimedia data including the callback number into the first call request signal, and may send the first call request signal to the second communication terminal 212.

In this case, a display unit of the second communication terminal 212 may display the callback number as well as the multimedia data. Accordingly, the user of the second communication terminal 212 may perform a phone call with the user of the first communication terminal 211 by referring to the callback number displayed on the display unit.

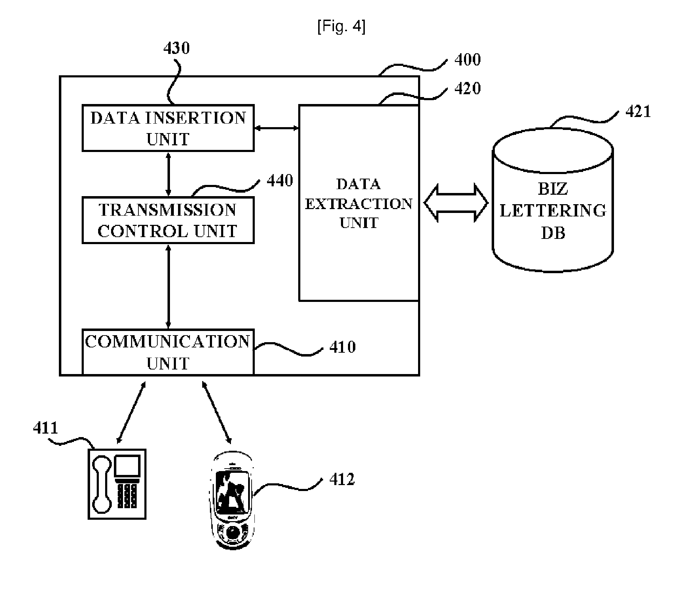

FIG. 4 is a block diagram illustrating a configuration of a system for providing caller ID service with respect to a business subscriber, according to a second embodiment of the present invention.

In the second embodiment of the present invention, a biz lettering server 400 inserts multimedia data into a first call request signal received from a first communication terminal 411 and sends the first call request signal to a second communication terminal 412. When receiving a callback request signal corresponding to the first call request signal from the second communication terminal 412, the biz lettering server 400 sets up a callback number corresponding to a telephone number of the first communication terminal 411 as a receiving number and performs a call connection corresponding to the callback request signal.

The system for providing caller ID service with respect to a business subscriber, according to a second embodiment of the present invention, includes the biz lettering server 400, a biz lettering database 421, the first communication terminal 411, and the second communication terminal 412. Also, the biz lettering server 400 includes a communication unit 41 O, a data extraction unit 420, a data insertion unit 430, and a transmission control unit 440.

The biz lettering database 421 records and maintains a telephone number and a callback number with respect to at least one first communication terminal included in a business subscriber subscribing to a biz lettering service and predetermined multimedia data registered by the business subscriber.

The telephone number, the callback number, and the multimedia data recorded in the biz lettering database 421 may be established to be identical with the callback number, and the multimedia data of the first embodiment.

The communication unit 410 performs communication between the at least one first communication terminal 411 and the second communication terminal 412. In the second embodiment, the first communication terminal 411 indicates a wired terminal included in a PBX of an enterprise and the second communication terminal 412 indicates a mobile communication terminal capable of using caller ID service and lettering service. The communication unit 41 O sends the first call request signal received from the first communication terminal 411 and sends the callback request signal with respect to the first call request signal, received from the second communication terminal 412, to a predetermined switchboard.

The data extraction unit 420 extracts multimedia data corresponding to the telephone number of the first communication terminal 411 sending the first call request signal, from the biz lettering database 421.

The data insertion unit 430 inserts the extracted multimedia data into the first call request signal. The data insertion unit 430 may insert the multimedia data into a caller ID area of the first call request signal.

The transmission control unit 440 sends the first call request signal including the multimedia data to the second communication terminal 412 corresponding to a telephone number recorded in a receiving number field of the first call request signal.

After sending the first call request signal, when receiving the callback request signal with respect to the first communication terminal 411 from the second communication terminal 412 via the communication unit 410, the data extraction unit 420 extracts a callback number corresponding to the telephone number of the first communication terminal 411 from the biz lettering database 421.

The data extraction unit 420 may extract the callback number from the biz lettering database 421 after checking whether the second communication terminal 411 is registered in the biz lettering service according to the present invention from a predetermined mobile communication system, by using the telephone number of the second communication terminal 412.

The transmission control unit 440 may set up the extracted callback number as a receiving number. For example, the transmission control unit 440 may record the extracted callback number in a receiving number field of the callback request signal. The transmission control unit 440 sends the callback request signal in which the callback number is set up as a receiving number, to a predetermined switchboard.

By performing the described operations, the biz lettering server 400 may control a call connection between the first communication terminal 411 and the second communication terminal 412 according to the callback request signal.

Through the described sequential operations, though receiving the first call request signal in which a number only for outgoing calls is set up as a calling number, from the first communication terminal 411 via the PBX, the user of the second communication terminal 212 may make a phone call with a user of the first communication terminal 411 by pushing a send button, as a general callback operation.

Also, in the second embodiment, the biz lettering server 400 may insert the callback number into the multimedia data, may insert the multimedia data including the callback number into the first call request signal, and may send the first call request signal to the second communication terminal 412.

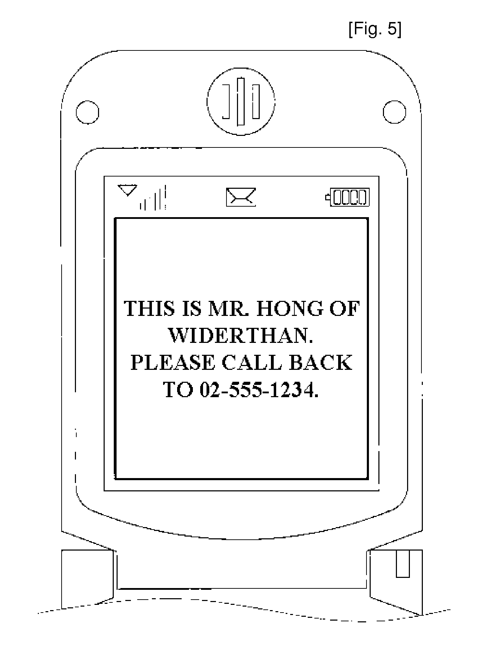

In this case, a display unit of the second communication terminal 412 may display the callback number as well as the multimedia data. Accordingly, the user of the second communication terminal 412 may perform a phone call with the user of the first communication terminal 411 by referring to the callback number displayed on the display unit. This case will be described in detail with reference to FIG. 5.

FIG. 5 is a diagram illustrating a callback number displayed in addition to multimedia on a display unit of a second communication terminal, according to another embodiment of the present invention.

According to another embodiment of the present invention, a biz lettering server may insert the callback number into the multimedia data inserted into a first call request signal received from a first communication terminal. Namely, the callback number is transformed into a text file, an image file, or a moving image file to compose the multimedia data.

In this case, on the display unit of the second communication terminal receiving the first call request signal, the callback number may also be displayed in addition to the multimedia data.

For example, as shown in FIG. 5, multimedia data including a callback number, such as "This is Mr. Hong of Widerthan. Please, call back to 02-555-1234." may be displayed on the display unit of the second communication terminal. In this case, a user of the second communication terminal may perform a phone call to Mr. Hong of Widerthan, a user of the first communication terminal by referring to the callback number.

The operation of inserting the callback number into the multimedia data and sending the multimedia data including the callback number as described above may be performed simultaneously with the first embodiment or the second embodiment.

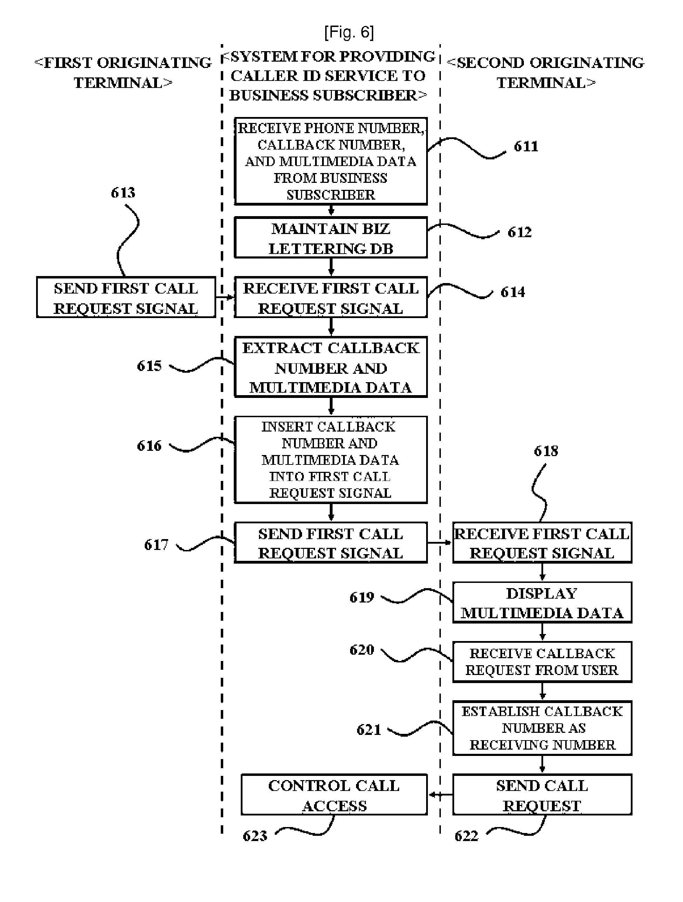

FIG. 6 is a flowchart illustrating a method of providing caller ID service with respect to a business subscriber, according to the first embodiment of the present invention.

According to the first embodiment of the present invention, a system for providing caller ID service with respect to a business subscriber receives a telephone number, a callback number, and multimedia data, of at least one first communication terminal, from a predetermined business subscriber (611). The system records and maintains the received telephone number, the callback number, and the multimedia data, corresponding to the at least one first communication terminal, in a biz lettering database (612).

The first communication terminal included in the business subscriber sends a first call request signal to the system (613), and the system receives the first call request signal (614). The system extracts the callback number and multimedia data corresponding to the telephone number of the first communication terminal from the biz lettering database (615).

The system inserts the extracted callback number and the multimedia data into the first call request signal (616) and sends the first call request signal including the extracted callback number and the multimedia data, to a second communication terminal (617).

In operation 616, the system may transform the callback number into a predetermined text file, image file, and moving image file, and may insert the transformed callback number into the multimedia data.

The second communication terminal receives the first call request signal including the callback number and the multimedia data from the system (618) and displays the multimedia data on a display unit (619). When receiving a callback request with respect to the first call request signal from a user (620), the second communication terminal sets up the callback number included in the first call request signal as a receiving number (621) and sends a callback request signal in which the callback number is set up as a receiving number, to the system (622).

The system controls a call connection between the second communication terminal and the first communication terminal according to the callback request signal by receiving the callback request signal from the second communication terminal and sending the callback request signal to a predetermined switchboard (623).

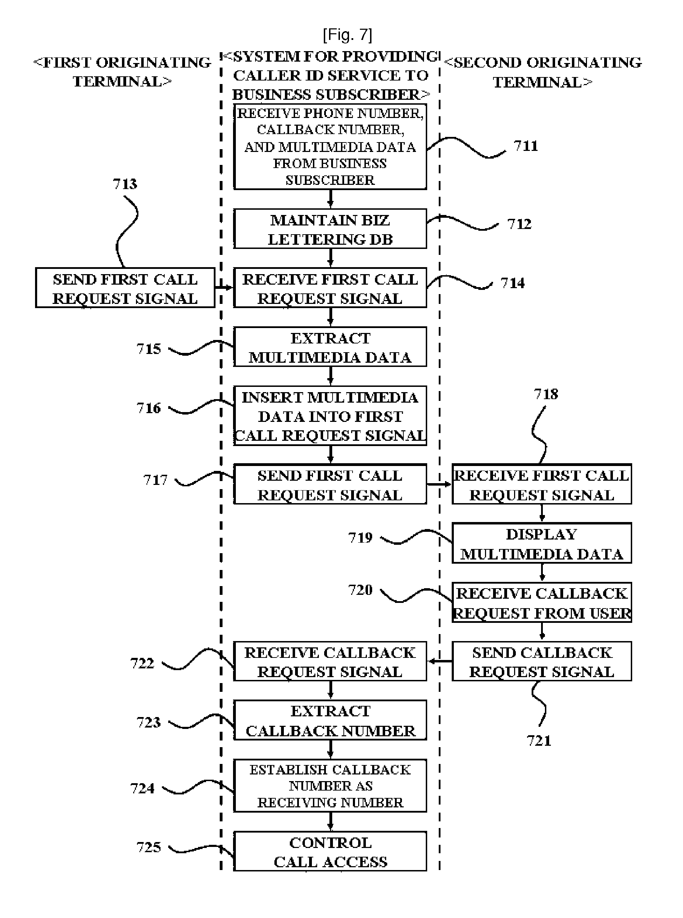

FIG. 7 is a flowchart illustrating a method of providing caller ID service with respect to a business subscriber, according to the second embodiment of the present invention.

According to the second embodiment of the present invention, a system for providing caller ID service with respect to a business subscriber receives a telephone number, a callback number, and multimedia data, of at least one first communication terminal, from a predetermined business subscriber (711). The system records and maintains the received telephone number, the callback number, and the multimedia data, corresponding to the at least one first communication terminal, in a biz lettering database (712).

The first communication terminal included in the business subscriber sends a first call request signal to the system (713), and the system receives the first call request signal (714). The system extracts the multimedia data corresponding to the telephone number of the first communication terminal from the biz lettering database (715).

The system inserts the extracted the multimedia data into the first call request signal (716) and sends the first call request signal including the extracted the multimedia data, to a second communication terminal (717).

In operation 716, the system may transform the callback number into a predetermined text file, image file, and moving image file, and may insert the transformed callback number into the multimedia data.

The second communication terminal receives the first call request signal including the callback number and the multimedia data from the system (718) and displays the multimedia data on a display unit (719).

When receiving a callback request with respect to the first call request signal from a user (720), the second communication terminal sends a callback request signal with respect to the first call request signal to the system (721).

When receiving the callback request signal from the second communication terminal (722), the system extracts the callback number corresponding to the telephone number of the first communication terminal from the biz lettering database (723).

The system sets up the extracted callback number as the receiving number (724) and sends the callback request signal in which the callback number is set up as a receiving number, thereby controlling a call connection between the second communication terminal and the first communication terminal according to the callback request signal (725).

The method of providing caller ID service with respect to a business subscriber, according to the present invention, may be embodied as a program instruction capable of being executed via various computer units and may be recorded in a computer readable recording medium. The computer-readable medium may include a program instruction, a data file, and a data structure, separately or cooperatively. The program instructions and the media may be those specially designed and constructed for the purposes of the present invention, or they may be of the kind well-known and available to those skilled in the art of computer software arts. Examples of the computer readable media include magnetic media (e.g., hard disks, floppy disks, and magnetic tapes), optical media (e.g., CD-ROMs or DVD), magneto-optical media (e.g., floptical disks), and hardware devices (e.g., ROMs, RAMs, or flash memories, etc.) that are specially configured to store and perform program instructions. The media may also be transmission media such as optical or metallic lines, wave guides, etc. including a carrier wave transmitting signals specifying the program instructions, data structures, etc. Examples of the program instructions include both machine code, such as produced by a compiler, and files containing high-level language codes that may be executed by the computer using an interpreter. The hardware elements above may be configured to act as one or more software modules for implementing the operations of this invention.

Although a few embodiments of the present invention have been shown and described, the present invention is not limited to the described embodiments. Instead, it would be appreciated by those skilled in the art that changes may be made to these embodiments without departing from the principles and spirit of the invention, the scope of which is defined by the claims and their equivalents.

### Industrial Applicability

An aspect of the present invention provides a method and system for providing caller ID service with respect to a business subscriber, and supporting a lettering service with respect to the business subscriber to maximize advertisement and promotion effects of the business subscriber.

An aspect of the present invention also provides a method and system for providing caller ID service with respect to a business subscriber, in which a callback number of an originating terminal included in the business subscriber is received from the business subscriber, the callback number is stored, and the callback number is inserted into a call request signal received from the originating terminal via a PBX of the business subscriber and is sent to a terminating terminal, thereby supporting a callback from the outside in a communication terminal of the business subscriber including the PBX.

An aspect of the present invention also provides a method and system for providing caller ID service with respect to a business subscriber, in which a call request signal including multimedia data with respect to the business subscriber is sent from an originating terminal to a terminating terminal, and when a callback request signal with respect to the originating terminal is received from the terminating terminal, call access with respect to the callback request signal is controlled by setting up the callback number as a receiving number, thereby supporting a callback from the outside in the originating communication terminal of the business subscriber using a PBX.

An aspect of the present invention also provides a method and system for providing caller ID service with respect to a business subscriber, in which multimedia data including the callback number is inserted into a call request signal received from an originating terminal included in a business subscriber and sent to a terminating terminal and the terminating terminal displays the multimedia data including the callback number, thereby easily sending a call request to the originating terminal by the callback number displayed in a display unit of the terminating terminal.

## Claims

1. A system for providing caller identification service, the system comprising:
a database (122, 221, 421) to receive and store identification information of an originating terminal (111, 211, 411) for a subscriber and corresponding multimedia data registered by the subscriber; and
a server (121, 200, 400) coupled to the database (122, 221, 421) and adapted to receive a call request signal from the originating terminal (111, 211, 411), to extract the corresponding multimedia data corresponding to the identification information of the originating terminal (111, 211, 411) from the database (122, 221, 421), to insert the extracted corresponding multimedia data into the call request signal, and to transmit the call request signal, including the inserted corresponding multimedia data, to a terminating terminal (112, 212, 412).

2. The system of claim 1, wherein the server (121, 200, 400) receives the call request signal via a private branch exchange (PBX) (119, 120).

3. The system of claim 2, wherein the identification information comprises a telephone number used for outgoing calls by the PBX (119, 120), and
wherein database (122, 221, 421) is further adapted to store corresponding callback information that comprises a callback number that is an external line number of the PBX (119, 120).

4. The system of claim 1, wherein the database (122, 221, 421) further stores a callback number with respect to the originating terminal (111, 211, 411), and
wherein the server (121, 200, 400) extracts the callback number corresponding to the originating terminal (111, 211, 411) from the database (122, 221, 421) and transmits the call request signal including the extracted callback number to the terminating terminal (112, 212, 412).

5. The system of claim 1, wherein the terminating terminal (112, 212, 412) is adapted to receive the call request signal, to display the multimedia data on a display unit, and to transmit a callback request to the callback number when a callback request to call the originating terminal back is received by the terminating terminal (112, 212, 412) from a user.

6. The system of claim 1, wherein the server (121, 200, 400) is further adapted to receive a callback request signal transmitted from the terminating terminal (112, 212, 412), to extract a callback number corresponding to the originating terminal (111, 211, 411) from the database (122, 221, 421), to insert the callback number into the callback request signal as a receiving number.

7. The system of claim 1, wherein the server (121, 200, 400) comprises:
a communication unit (210, 410) to receive the call request signal from the originating terminal (111, 211, 411);
a data extraction unit (220, 420) to read the corresponding multimedia data corresponding to the identification information of the originating terminal (111, 211, 411) from the database(122, 221, 421);
a data insertion unit (230, 430) to insert the extracted corresponding multimedia data in the call request signal; and
a transmission control unit (240, 440) to transmit the call request signal, including the inserted corresponding multimedia data, to the terminating terminal (112, 212, 412) via the communication unit (210, 410).

8. The system of claim 7, wherein the multimedia data includes a callback number, and
wherein the data insertion unit (230, 430) inserts the callback number in the call request signal, such that the terminating terminal (112, 212, 412) can display the multimedia data and the callback number on a display unit.

9. The system of claim 1, wherein the database (122, 221, 421) is further adapted to receive and store, with the identification information of the originating terminal (111, 211, 411) and the multimedia data registered by the subscriber, corresponding callback information of the originating terminal (111, 211, 411).

10. The system of claim 9, wherein the corresponding callback information comprises a callback number, and
wherein the server (121, 200, 400) is further adapted to extract the callback number corresponding to the identification information of the originating terminal (111, 211, 411) from the database (122, 221, 421) and controls call connection to the callback number to be performed, when receiving a callback request signal transmitted to the identification information of the originating terminal (111, 211, 411) from the terminating terminal (112, 212, 412).

11. The system of claim 10, wherein the server comprises:
a communication unit (210, 410) to receive the call request signal from the originating terminal (111, 211, 411);
a data read unit (220, 420) to read the corresponding multimedia data corresponding to the identification information of the originating terminal (111, 211, 411) from the database (122, 221, 421);
a data insertion unit (230, 430) to insert the corresponding multimedia data in the call request signal; and
a transmission control unit (240, 440) to transmit the call request signal, including the inserted corresponding multimedia data, to the terminating terminal (112, 212, 412) via the communication unit (210, 410),
wherein, upon receiving a callback request signal from the terminating terminal (112, 212, 412), the data read unit reads the corresponding callback information, including the callback number, corresponding to the identification information of the originating terminal from the database (122, 221, 421) and establishes a receiving number of the callback request signal as the read callback number to control a call connection from the terminating terminal (112, 212, 412) back to the originating terminal (111, 211, 411).

12. A method for providing caller identification service, the method comprising:
receiving identification information and multimedia data with respect to an originating terminal (111, 211, 411) via a communication network (118);
recording the identification information and the multimedia data in a database (122, 221, 421);
receiving a call request signal with respect to a terminating terminal (112, 212, 412) from the originating terminal (111, 211, 411);
reading the multimedia data corresponding to the identification information of the originating terminal from database (122, 221, 421);
inserting the multimedia data in the call request signal; and
transmitting the call request signal to the terminating terminal (112, 212, 412), including the multimedia data.

13. The method of claim 12, further comprising:
receiving and recording callback information with respect to the originating terminal (111, 211, 411) in the database (122, 221, 421);
reading the callback information corresponding to the identification information of the originating terminal from the database (122, 221, 421);
inserting the callback information in the call request signal;
receiving a callback request signal from the terminating terminal (112, 212, 412);
extracting the callback information corresponding to the originating terminal (111, 211, 411) from the database (122, 221, 421); and
inserting the callback number into the callback request signal as a receiving number.

14. The method of claim 13, wherein the callback information comprises a callback number, wherein the method further comprises:
receiving the callback number with respect to the originating terminal (111, 211, 411) from a subscriber;
recording the callback number with respect to the originating terminal (111, 211, 411) in the database (122, 221, 421);
receiving a callback request signal from the terminating terminal (112, 212, 412), the callback request signal associated with the call request signal;
reading the callback number corresponding to the identification information of the originating terminal (111, 211, 411) from the database (122, 221, 421); and
controlling a call connection from the terminating terminal (112, 212, 412) back to the originating terminal (111, 211, 411) by establishing a receiving number area of the callback request signal as the callback number.

15. A computer-readable medium having stored thereon instructions that, when executed by a computing device, cause the computing device to perform operations for performing the method according to any one of claims 12-14.
